# EUROPEAN PATENT SPECIFICATION

(11) **EP 3 030 611 B1**
(45) Date of publication and mention of the grant of the patent: **05.06.2019**
(21) Application number: 14834107.6
(22) Date of filing: 05.08.2014
(51) Int. Cl.: C08K 7/14, C08L 55/02, C08L 25/14, B32B 5/02, B32B 5/26, B32B 37/06, B32B 37/10, B32B 37/14, D04H 1/4209, D04H 1/60, D04H 1/732, D04H 3/02, D04H 3/002

(54) **A SCRIMLESS, RIGID COMPOSITE MATERIAL**
GEWEBELOSES STARRES VERBUNDMATERIAL
MATÉRIAU COMPOSITE RIGIDE SANS RENFORT

(30) Priority: 06.08.2013 US 201361862616 P
(43) Date of publication of application: 15.06.2016
(73) Proprietor: Neenah Technical Materials Inc., Alpharetta, Georgia 30005 (US)
(72) Inventor: ANDREWS, Bruce, Alpharetta, Georgia 30005 (US); LOCKYER, Paul B., Alpharetta, Georgia 30005 (US); SANGINETTI, Michael R., Alpharetta, Georgia 30005 (US); DAVID, Benny E., Alpharetta, Georgia 30005 (US); LOCKYER, Dennis G., Alpharetta, Georgia 30005 (US); ADJEI, Thomas, Alpharetta, Georgia 30005 (US)
(74) Representative: Thurston, Joanna
(86) International application number: PCT/US2014/049691
(87) International publication number: WO 2015/020999

(56) References cited:
- US-A- 4 044 188
- US-A- 4 044 188
- US-A- 4 770 929
- US-A- 4 937 145
- US-A1- 2007 269 645

## Description

### TECHNICAL FIELD

The present invention generally relates to a scrimless, porous or non-porous, rigid composite material that is made using nonwoven core materials, and more specifically relates to a scrimless, pressure- and/or thermo-formable, porous or non-porous, rigid composite material.

### BACKGROUND

Rigid composite materials, which are made using nonwoven core materials in combination with either light-weight woven reinforcing fabrics or light-weight scrim/veil materials, are known. These prior art rigid composite materials, in which the woven fabrics or scrim/veil materials are embedded within the rigid composite material or on one or opposing surfaces of the rigid composite material, are used in a variety of end-use applications. One such application is in the construction of aircraft cabin structures (e.g., side-walls, ceiling panels, stow bins).
The nonwoven core materials that are used to construct these rigid composite materials are typically made using a combination of reinforcing fibers (e.g., glass or carbon fibers) and thermoplastic fibers or resins (in powder form). The light-weight woven
reinforcing fabrics and scrim/veil materials are made up of fibrous materials (e.g., inorganic fibers and/or organic polymeric fibers).

The nonwoven core materials are typically produced using well-known, commercial production processes (e.g., wet-lay, air-lay, carding and needle punching) and then subjected to a batch or continuous heated press consolidation process using temperature, pressure and residence time as parameters to render the material into a rigid composite form (i.e., rigid composite sheet layers). The light-weight woven reinforcing fabrics and scrim/veil materials are introduced during either of the two steps of the manufacturing process described above.

The reinforced rigid composite sheet layer or rigid composite material is then used to form end-use articles in various part geometries using, for example, pressure- and/or thermo-forming or compression molding techniques. During these forming or molding steps, a single sided or double sided forming tool is heated and the rigid composite material is softened at high temperature to form a semi-molten mass with reasonable sag, which is then laid onto the forming tool to achieve the desired end-use shape in the part. If the composite material is made from amorphous, semi-crystalline and/or crystalline polymers, the softening step may cause the sheet to sag excessively, thereby increasing the risk of molten material dripping onto or touching the heating elements prior to introduction into the mold cavities. Excessive sag could also cause permanent wrinkles and/or folds in the formed/shaped part which leads to part rejects/waste in the production of these end-use articles. The woven reinforcing fabrics or scrim/veil materials embedded within or on one or opposing surfaces of the rigid composite material provides a support structure or mechanism to keep the semi-molten sheet from sagging excessively and allows part forming to take place successfully without permanent wrinkles and folds through the multiple stages of the forming process.

As will be readily appreciated by those skilled in the art, there are continuing demands from the aerospace industry to further reduce the weight and cost of parts used in the construction of aircraft interiors (e.g., side-walls, ceiling panels, stow bins). US 4 770 929 discloses a light-weight composite material having a laminated structure.

Moreover, the use of woven reinforcing fabrics or scrim/veil materials in these prior art rigid composite materials places limitations on the range of molded part geometries that can be produced. The coefficient of elasticity or stretch in both the x and y directions from these support layers limits the amount of end-use surface area of these composite materials. For example, if a nonwoven core material or rigid composite sheet layer is covered with a woven reinforcing fabric or scrim/veil material with certain stretch properties that measures one square meter (1 m²) in total surface area, the maximum amount of surface area that the composite can have is (A_{CS})(E_{S}), where A_{CS} is the total surface area of the scrim and E_{S} is the coefficient of elasticity of the scrim; or 1 m²(E_{S}). As will be readily appreciated by those skilled in the art, this surface area limitation places limits on the complexity of the part geometries and deep draws achievable from these reinforced composite sheet layers.

### SUMMARY

Objects and advantages of the invention will be set forth in part in the following description, or may be obvious from the description, or may be learned through practice of the invention. A method is provided for making a scrimless, pressure-formable and/or thermo-formable, porous or non-porous, rigid composite material. The method comprises: consolidating one or more nonwoven core materials by heating and compressing the one or more nonwoven core materials, and adding one or more unwoven patterned supportive fiber layers on and/or between layers of the one or more nonwoven core materials either before or during consolidation, wherein the nonwoven core materials are composed of from about 30 to about 70 % by wt., based on the total weight of the nonwoven material, of reinforcing fibers and from about 40 to about 70 % by wt., based on the total weight of the nonwoven material, of one or more thermoplastic fibers or resins and wherein the unwoven patterned supportive fiber layer comprises a plurality of fibers arranged in a pattern that has a straight, stepped, angled, staggered, or grid-shaped configuration extending across a cross direction of the layer of nonwoven core material, and wherein the heating and compressing conditions are sufficient to melt the thermoplastic fibers or resins, thereby forming a network of reinforcing fibers dispersed in a thermoplastic matrix.

The scrimless, pressure-formable and/or thermo-formable, porous or non-porous, rigid composite material formed according to such a method is also generally provided. In one embodiment, a scrimless, pressure-formable and/or thermo-formable rigid composite material is provided, which comprises: one or more unwoven patterned supportive fiber layers; and one or more rigid composite sheet layers prepared from one or more nonwoven core materials, the one or more rigid composite sheet layers comprising a network of reinforcing fibers dispersed in a thermoplastic matrix having been formed by consolidating the one or more nonwoven core materials by heating and compressing the one or more nonwoven core materials under conditions sufficient to melt the thermoplastic fibers or resins, wherein, the one or more supportive fiber layers arc located on or within the one or more rigid composite sheet layers and/or on a top and/or bottom surface of the rigid composite material, and wherein the unwoven patterned supportive fiber layer comprises a plurality of fibers arranged in a pattern that has a straight, stepped, angled, staggered, or grid shaped configuration extending across a cross-direction of the layer of nonwoven core material, and wherein the heating and compressing conditions are sufficient to melt the thermoplastic fibers or resins, thereby forming a network of reinforcing fibers dispersed in a thermoplastic matrix.

Other features and aspects of the present invention are discussed in greater detail below.

### BRIEF DESCRIPTION OF THE DRAWINGS

A full and enabling disclosure of the present invention, including the best mode thereof to one skilled in the art, is set forth more particularly in the remainder of the specification, which includes reference to the accompanying figures, in which:
Fig. 1 an exemplary scrimless, pressure-formable and/or thermo-formable rigid composite material according to one embodiment of the present invention; and
Fig. 2 shows a top view of an exemplary unwoven patterned supportive fiber layer, for use with the exemplary scrimless, pressure-formable and/or thermo-formable rigid composite material of Fig. 1.

Repeat use of reference characters in the present specification and drawings is intended to represent the same or analogous features or elements of the present invention.

### DEFINITIONS

The term "formable", as used herein, is intended to mean a sheet material that may be shaped or formed into a variety of different forms using heat and/or pressure, while the term "nonwoven", as used herein, is intended to mean a fabric-like material made from fibers, bonded together by chemical, mechanical, heat or solvent treatment. As used herein, the term "polymer" generally includes, but is not limited to, homopolymers; copolymers, such as, for example, block, graft, random and alternating copolymers; and terpolymers; and blends and modifications thereof. Furthermore, unless otherwise specifically limited, the term "polymer" shall include all possible geometrical configurations of the material. These configurations include, but are not limited to isotactic, syndiotactic, and random symmetries

The term "thermoplastic" is used herein to mean any material formed from a polymer which softens and flows when heated; such a polymer may be heated and softened a number of times without suffering any basic alteration in characteristics, provided heating is below the decomposition temperature of the polymer. Examples of thermoplastic polymers include,
by way of illustration only, polyolefins, polyesters, polyamides, polyurethanes, acrylic ester polymers and copolymers, polyvinyl chloride, polyvinyl acetate, polyetheretherketones (PEEK), polyetherimides (PEI), polyphenylene sulfide (PPS), phenyl ether polymers (PPE), polyarylsulphones (PSU), polysulfone, etc., and copolymers and mixtures thereof.

### DETAILED DESCRIPTION

Reference now will be made to the embodiments of the invention, one or more examples of which are set forth below. Each example is provided by way of an explanation of the invention, not as a limitation of the invention. In fact, it will be apparent to those skilled in the art that various modifications and variations can be made in the invention without departing from the scope of the claims . For instance, features illustrated or described as one embodiment can be used on another embodiment to yield still a further embodiment. Thus, it is intended that the present invention cover such modifications and variations as come within the scope of the appended claims and their equivalents. It is to be understood by one of ordinary skill in the art that the present discussion is a description of exemplary embodiments only, and is not intended as limiting the broader aspects of the present invention, which broader aspects are embodied exemplary constructions.

An unwoven (i.e., not woven nor a nonwoven) patterned supportive fiber layer is generally provided along with its methods of formation and use. The fiber layer is used within and/or on one or opposing surfaces of a rigid composite material. The unwoven patterned supportive fiber layer serves a similar purpose to that of a woven reinforcing fabric or scrim/veil material, that being to support the composite material during the part production processes described above. The use of such an unwoven patterned supportive fiber layer advantageously yields significant weight and cost reductions in the final formed or molded product, and allows for molding of complex part geometries. A formed (e.g., molded) article or part is also provided that is prepared from the scrimless, pressure-formable and/or thermo-formable, porous or non-porous, rigid composite material described above. In an exemplary embodiment, the formed part is suitable for use in the manufacture of aircraft cabin structures such as side-walls, ceiling panels, stow bins, galley, bathroom, cockpit, cabin seats, and cargo components.

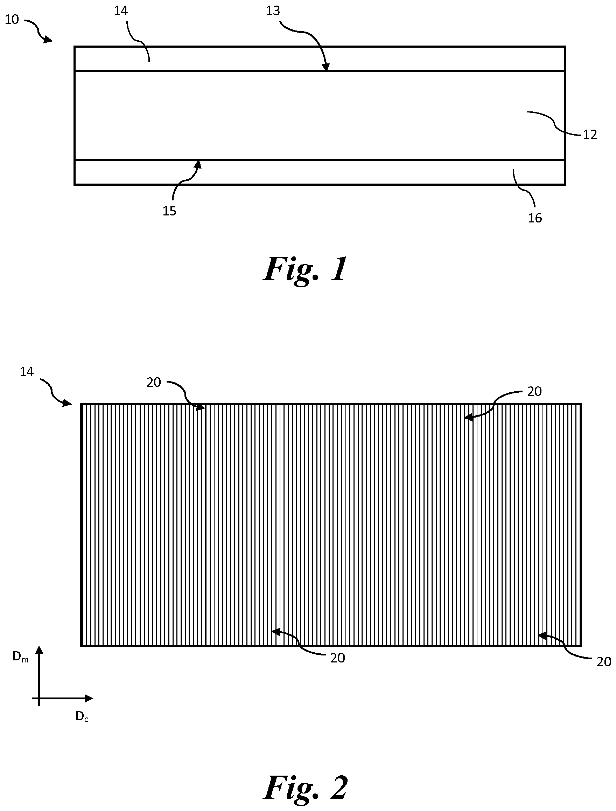

In one embodiment, a scrimless, pressure-formable and/or thermo-formable, porous or non-porous, rigid composite material is generally provided that includes: one or more unwoven patterned supportive fiber layers; and one or more rigid composite sheet layers prepared from nonwoven core materials. The one or more supportive fiber layers are located on or within the one or more rigid composite sheet layers and/or on a top and/or bottom surface of the rigid composite material. Referring to Fig. 1, an exemplary scrimless, pressure-formable and/or thermo-formable rigid composite material 10 is shown having a rigid composite sheet layer 12 formed from nonwoven core materials, a first supportive fiber layer 14 on a first surface 13 of the rigid composite sheet layer 12, and a second supportive fiber layer 16 on a second surface 15 of the rigid composite sheet layer 12 that is opposite from the first surface 13. More than one rigid composite sheet layers 12 may be included within the rigid composite material 10.

The formable, porous or non-porous, rigid composite material does not require a supportive scrim, and therefore avoids the disadvantages associated with these support structures such as additional weight and cost. The aerospace industry is very sensitive to these disadvantages, so reductions in weight and cost are extremely important. In addition, scrim supported materials are limited in terms of the degree of complexity of molded parts that can be made using these materials. The composite material solves this problem by offering flexibility in forming and molding different part geometries, which is actively sought after by part designers and engineers.

In a preferred embodiment, the composite material comprises: an unwoven patterned supportive fiber layer in the form of a layer of unidirectional glass and/or carbon fibers (tow); and one or more rigid composite sheet layers prepared from nonwoven core materials composed of from about 40 to about 50 % by wt., based on the total weight of the nonwoven core material, of glass and/or carbon reinforcing fibers and from about 45 to about 60 % by wt., based on the total weight of the nonwoven core material, of PEI fibers or pulverized resin, wherein, the layer of unidirectional glass or carbon fibers is located on or within the one or more rigid composite sheet layers and/or on a top and/or bottom surface of the rigid composite material, extending across the entire length and incrementally spaced along the width of the layer(s) or material.

In an embodiment, as well as other embodiments of the present invention, the composite material has a degree of loft upon reheating at a temperature where the high temperature thermoplastic materials start to soften/melt. Here, lofting is achieved by exploiting properties of the glass, carbon and aramid fibers. During the process of making the rigid composite sheet layer, the fibers become cantilevered and curved, meaning that the fibers are not perfectly straight. Specifically, during the consolidation process, the fibers are wetted out by the thermoplastic material(s) and then compressed down to a certain depth with minimal attrition or breakage of the fibers. The flowing nature of the thermoplastic material(s) at its melt temperature during the press consolidation step cushions these fibers and allows for the limited attrition or breaking of the fibers, which is important to achieving certain mechanical properties in the end-use composite application. The thermoplastic material(s) is then carefully cooled and solidified during this consolidation step, keeping the fibers in a cantilevered and curved state. When the composite material is re-heated during part forming and nears the glass transition temperature of the thermoplastic material(s), the thermoplastic material(s) returns to a malleable state and allows the fibers to return to their nascent or original form as straight fibers, causing loft in the inventive composite material.

The components of the composite material (i.e., the unwoven patterned supportive fiber layer(s) and the rigid composite sheet layer(s)) are discussed in greater detail below, along with the methods of making the composite material.

### I. Unwoven. Patterned Supportive Fiber Layers

As stated above, the supportive fiber layer is located on or within the one or more rigid composite sheet layers and/or on a top and/or bottom surface of the rigid composite material, extending across the entire length and incrementally spaced along the width of the layer(s) or material. The one or more unwoven patterned supportive fiber layers serve a similar purpose to that of a woven reinforcing fabric or scrim/veil material, that being to support the composite material during the part production processes described herein.

Suitable fibers for use in the supportive fiber layer(s) include, but are not limited to, glass fibers, carbon fibers, partially oxidized carbon fibers, oxidized polyacrylonitrile fibers, aramid fibers (e.g., para-aramid and meta-aramid fibers), high temperature polyamide fibers, liquid crystalline polymer fibers, ultrahigh molecular weight fibers (e.g., polyethylene fibers), and combinations thereof. These fibers have an average diameter ranging from about 6 to about 24 microns (preferably, from about 9 to about 16 microns). The length or lengths of these supportive fibers and the number of fibers present in the supportive layer depends upon several factors including the final dimensions of the parts being produced.

The supportive fiber layer(s) may be added to the nonwoven core materials either before or during consolidation. In an exemplary embodiment, the layer(s) is added to the top of the nonwoven core material during the consolidation step.

Suitable fiber patterns for the supportive fiber layer(s) include, but are not limited to, straight, stepped, angled, staggered and grid-shaped configurations such as a series of parallel lines, chevrons or zig zags (series of "V" shapes), and the like, which extend across the entire width (cross-direction) of the nonwoven sheet material. In a particular embodiment, the fiber pattern is made up of unidirectional fibers such as filament tows arranged in a series of parallel lines spaced sequentially. For example, the unwoven, patterned supportive fiber layer comprises a layer of unidirectional fibers (e.g., glass, carbon and/or aramid (e.g., meta-aramid, para-aramid) filament yarns in the form of unidirectional tow).

The distance between the supportive fibers in the fiber pattern is chosen to optimize the stiffness properties of the supportive layer(s) and to balance the sag in the composite material prior to part forming. In one exemplary embodiment, the distance between the fibers ranges from greater than or equal to 12 millimeters (mm) to less than or equal to 150 mm.

Referring to Fig. 2, for example, a top view of an exemplary supportive fiber layer 14 is shown including a plurality of unidirectional fibers 20 (e.g., filament tows) oriented in the machine direction (Dₘ). As shown, the unidirectional fibers 20 are arranged in a series of parallel lines in the machine direction with spacing defined in the cross-machine direction (D_{c}). For example, the spacing can be 12 mm to 150 mm between adjacent fibers 20. Although shown as substantially uniformly spaced, the unidirectional fibers 20 may be spaced apart with a different spacing therebetween.

### II. Rigid Composite Sheet Layers

The rigid composite material includes one or more rigid composite sheet layers, with each rigid composite sheet prepared from nonwoven core materials. The nonwoven core material is generally composed of reinforcing fibers and high temperature thermoplastic fibers or resins. In one embodiment, each of the rigid composite sheet layers is prepared from nonwoven core materials composed of from about 30 to about 70 % by wt. (e.g., from about 40 to about 50 % by wt.), based on the total weight of the nonwoven core material, of reinforcing fibers and from about 40 to about 70 % by wt. (e.g., from about 45 to about 60 % by wt.), based on the total weight of the nonwoven core material, of high temperature thermoplastic fibers or resins.

Suitable reinforcing fibers for use in the nonwoven core material used in the production of the rigid composite sheet layers include, but are not limited to, non-organic fibers (e.g., fiberglass fibers), metalized glass fibers, carbon fibers (including metalized carbon fibers and partially oxidized carbon fibers), aramid fibers (e.g., meta-aramid and para-aramid fibers), graphite fibers (including metalized graphite fibers) and synthetic organic fibers such as polyester, polyethylene, or the like, and combinations thereof.

Suitable thermoplastic fibers or resins (powder form) for use in the nonwoven core material used in the production of the rigid composite sheet layers include, but is not limited to, acrylonitrile-butadiene-styrene (ABS) resins, polyamide resins (e.g., nylon 6, nylon 66), polyamide-imides, polycarbonates, aromatic and aliphatic polyesters, polyether ketones, poly(ether ketone ketones), polyetheretherketones (PEEK), polyetherimides (PEI) (e.g., polyetherimide fibers or pulverized resin), polyolefins (e.g., polyethylene, high density polyethylene, linear low density polyethylene, polypropylene), polyoxymethylenes, polyphenylene ether (PPE or PPO) resins, polyphenylene sulfide (PPS) resins, polysulfones (e.g., polyether sulfones), polyvinyl chloride (PVC) resins, vinyl aromatic resins (e.g., polystyrene), vinylidene chloride/vinyl chloride resins, or the like, and combinations thereof.

Other materials that may be added to the nonwoven core materials include, but are not limited to, anti-foaming agents, antioxidants, bactericides, dyes, electromagnetic radiation absorption agents, fillers, foaming agents, pigments, thickeners, ultraviolet (UV) stabilizers, and the like.

### III. Methods of Making Rigid Composite Materials

The nonwoven core material(s) can be prepared by known methods and techniques for manufacturing a paper web. Such methods involve discharging component materials (e.g., fibers, pulverized resin materials, etc.) onto a continuously moving support (inclined or fourdrinier wire) or between facing surfaces of two such moving supports to form a continuous fibrous web. This web is dried and subjected to subsequent treatments, as explained in more detail below. Preferred methods of making the nonwoven core material include wet-lay, spun-bond, air-lay/dry-lay and carding/needle punch papermaking technologies. In an exemplary embodiment, the reinforcing fibers (e.g., glass, carbon and/or aramid fibers) and the high temperature thermoplastic fibers or resins in powder form (e.g., PEI fibers) are combined in a liquid medium (e.g., an aqueous solvent) to form a suspension (e.g., a slurry, dispersion, foam, or emulsion). The suspension can further comprise additives such as anti-coagulants, binders, buffers, dispersants, foaming agents, surfactants, and the like, and combinations thereof, to optimize properties of the suspension such as adhesion, web-forming, fiber dispersion, fiber orientation, fiber flow, and the like. The suspension is applied as a slurry (via, for example, a head box) to a porous surface (e.g., a wire mesh). Liquid and suspended components too small to remain on the porous surface are removed through the porous surface by gravity or preferably by use of vacuum, to leave a layer comprising a dispersion of fibers on the porous surface. The porous surface is typically a conveyor belt having pores. The dimensions of the conveyor belt are suitable to provide, after the application of the dispersed medium and removal of liquid, a continuous fibrous mat having a width of about two (2) meters. The fibrous mat is then dried to remove moisture by passing heated air through the mat or by using heated can dying.

The dried fibrous mat or nonwoven core material is then consolidated by heating and compressing the material under conditions sufficient to melt the high temperature thermoplastic fibers or resins, thereby forming a network of reinforcing fibers dispersed in a thermoplastic matrix (i.e., a rigid composite sheet layer). The rigid composite sheet layer can then be stacked into sheets or in certain cases folded or rolled for further use.

The unwoven patterned supportive fiber layer(s) may be added to the nonwoven core material either before or during consolidation. In certain embodiments, the one or more supportive fiber layers are located on or within the one or more rigid composite sheet layers and/or on a top and/or bottom surface of the rigid composite material, extending across the entire length and incrementally spaced along the width of the layer(s) or material.

In a preferred embodiment, this layer(s) is applied to the top or bottom of the nonwoven core material during the consolidation process using heat and pressure.

Specifically, the unwoven patterned supportive fiber layer(s) is applied to an upper surface of the nonwoven core material and the nonwoven core material plus additional layer(s) are then passed into a heated nip roller for compressing and/or compacting the laminate structure into a rigid composite material. As will be readily appreciated by those skilled in the art, the nip pressure and temperature of the heated rolls can be adjusted to maximize the final properties of the composite. The incoming layers into the nip roller can also be pre-heated using, for example, infrared (IR) strip heaters, magnetic induction heating, or hot air jets, to improve consolidation step production rates and efficiencies.

The resulting scrimless, rigid composite material may then be formed into various articles using methods known in the art including, for example, pressure-forming, thermo-forming, stamping, compression molding, and the like. In a preferred embodiment, the composite material is molded using a thermo-forming process or technique, which involves heating the composite material and then forming the softened material into a desired shape using a single or double sided mold, where the material is originally in the form of a film or sheet layer. Once the desired shape has been obtained, the formed article is cooled below its melt or glass transition temperature.

Parts formed from the inventive scrimless composite material may be used in a variety of different end-use applications including, but not limited to, interior panels (e.g., side wall and ceiling panels) for aircraft, automobiles, passenger ships, trains, and the like.

The formed parts demonstrate a number of beneficial properties including, but not limited to, low flame spread, low heat release rate, low smoke density and low smoke toxicity.

Thus, methods are also provided for making the scrimless, pressure-formable and/or thermo-formable, porous or non-porous, rigid composite material described above. In one embodiment, the method includes: adding one or more unwoven patterned supportive fiber layers on and/or between layers of the nonwoven core materials either before or during consolidation, wherein the nonwoven core materials are composed of from about 30 to about 70 % by wt., based on the total weight of the nonwoven material, of reinforcing fibers and from about 30 to about 70% by wt.(e.g., from about 40 to about 70% by wt.), based on the total weight of the nonwoven core material, of one or more high temperature thermoplastic fibers or resins.

Methods are also provided for increasing the design complexity achievable for parts formed or shaped from rigid composite materials, the method comprising using the one or more unwoven patterned supportive fiber layers described above on or between one or more nonwoven core materials either before or during consolidation.

## Claims

1. A method of making a scrimless, pressure-formable and/or thermo-formable, porous or non-porous, rigid composite material (10), the method comprising:
consolidating one or more nonwoven core materials by heating and compressing the one or more nonwoven core materials, and adding one or more unwoven patterned supportive fiber layers (14;16) on and/or between layers of the one or more nonwoven core materials either before or during consolidation, wherein the nonwoven core materials are composed of from about 30 to about 70 % by wt., based on the total weight of the nonwoven material, of reinforcing fibers and from about 40 to about 70 % by wt., based on the total weight of the nonwoven material, of one or more thermoplastic fibers or resins and wherein the unwoven patterned supportive fiber layer comprises a plurality of fibers arranged in a pattern that has a straight, stepped, angled, staggered, or grid-shaped configuration extending across a cross-direction of the layer of nonwoven core material, and wherein the heating and compressing conditions are sufficient to melt the thermoplastic fibers or resins, thereby forming a network of reinforcing fibers dispersed in a thermoplastic matrix.

2. The method as in claim 1, wherein the plurality of fibers of the unwoven patterned supportive fiber layer (14;16) comprise glass fibers, carbon fibers, partially oxidized carbon fibers, oxidized polyacrylonitrile fibers, aramid fibers, high temperature polyamide fibers, liquid crystalline polymer fibers, ultrahigh molecular weight fibers, or combinations thereof.

3. The method as in claim 1, wherein the unwoven patterned supportive fiber layer (14;16) comprises a layer of unidirectional fibers, optionally wherein a distance is defined between the fibers in a cross-direction is 12 mm to 150 mm.

4. The method as in claim 3, wherein the unidirectional fibers are filament yarns in the form of unidirectional tow and/or wherein the filament yarns comprise glass fibers, carbon fibers, aramid fibers, or combinations thereof.

5. The method as in claim 1, wherein the reinforcing fibers of the nonwoven core materials comprise non-organic fibers, metalized glass fibers, carbon fibers, aramid fibers, graphite fibers, synthetic organic fibers, or combinations thereof.

6. The method as in claim 5, wherein the reinforcing fibers of the nonwoven core materials comprise carbon fibers, optionally wherein the carbon fibers include metalized carbon fibers, partially oxidized carbon fibers, or a combination thereof.

7. The method as in claim 6, wherein the thermoplastic fibers or resins of the nonwoven core materials comprise acrylonitrile-butadiene-styrene, polyamide, polyamide-imide, polycarbonate, polyester, polyether ketone, poly(ether ketone ketone), polyetheretherketone, polyetherimide, polyolefin, polyoxymethylene, polyphenylene ether, polyphenylene sulfide, polysulfone, polyvinyl chloride, vinyl aromatic, vinylidene chloride/vinyl chloride, or combinations thereof.

8. The method as in claim 1, further comprising:
forming the layers of nonwoven core materials, wherein the one or more unwoven patterned supportive fiber layers(14;16) is added on and/or between layers of nonwoven core materials after forming the layers of nonwoven core materials.

9. The method as in claim 1, further comprising:
forming the layers of nonwoven core materials; and
thereafter, consolidating the nonwoven core materials by heating and compressing the nonwoven core materials under conditions sufficient to melt the thermoplastic fibers or resins, thereby forming a network of reinforcing fibers dispersed in a thermoplastic matrix, wherein the one or more unwoven patterned supportive fiber layers (14;16) is added on and/or between layers of nonwoven core materials after consolidating the layers of nonwoven core materials.

10. A scrimless, pressure-formable and/or thermo-formable rigid composite material (10), which comprises:
one or more unwoven patterned supportive fiber layers (14;16); and
one or more rigid composite sheet layers (12) prepared from one or more nonwoven core materials, the one or more rigid composite sheet layers comprising a network of reinforcing fibers dispersed in a thermoplastic matrix having been formed by consolidating the one or more nonwoven core materials by heating and compressing the one or more nonwoven core materials under conditions sufficient to melt the thermoplastic fibers or resins,
wherein, the one or more supportive fiber layers are located on or within the one or more rigid composite sheet layers and/or on a top and/or bottom surface (13;15) of the rigid composite material, and wherein the unwoven patterned supportive fiber layer comprises a plurality of fibers arranged in a pattern that has a straight, stepped, angled, staggered, or grid-shaped configuration extending across a cross-direction of the layer of nonwoven core material, and wherein the heating and compressing conditions are sufficient to melt the thermoplastic fibers or resins, thereby forming a network of reinforcing fibers dispersed in a thermoplastic matrix.

11. The rigid composite material (10) as in claim 10, wherein the plurality of fibers of the unwoven patterned supportive fiber layer (14;16) comprise glass fibers, carbon fibers, partially oxidized carbon fibers, oxidized polyacrylonitrile fibers, aramid fibers, high temperature polyamide fibers, liquid crystalline polymer fibers, ultrahigh molecular weight fibers, or combinations thereof.

12. The rigid composite material (10) as in claim 10, wherein the unwoven patterned supportive fiber layer (14;16) comprises a layer of unidirectional fibers, optionally wherein the unidirectional fibers are filament yarns in the form of unidirectional tow, and wherein the filament yarns comprise glass fibers, carbon fibers, aramid fibers, or combinations thereof.

13. The method as in claim 1, wherein when consolidating, the reinforcing fibers are wetted out by the melted thermoplastic fibers or resins and then compressed down to a certain depth with minimal attrition or breakage of the reinforcing fibers, the melted thermoplastic fibers or resins having a flowing nature that cushions the reinforcing fibers, the thermoplastic fibers or resins thereafter being cooled and solidified when consolidating, keeping the reinforcing fibers in a cantilevered and curved state; and
wherein when subsequently forming a part using the rigid composite material, the thermoplastic fibers or resins return to a malleable state, allowing the reinforcing fibers to return to their nascent or original form as straight fibers, causing loft in the rigid composite material.

14. The rigid composite material (10) as in claim 10, wherein the reinforcing fibers are in a cantilevered and curved state, the cantilevered and curved state introduced when consolidating, wherein when consolidating, the reinforcing fibers having been wetted out by melted thermoplastic fibers or resins and then compressed down to a certain depth with minimal attrition or breakage of the reinforcing fibers, the melted thermoplastic fibers or resins having a flowing nature that cushions the reinforcing fibers, the thermoplastic fibers or resins thereafter being cooled and solidified during the consolidation, keeping the fibers in said cantilevered and curved state; and
wherein when forming a part using the rigid composite material, the thermoplastic fibers or resins return to a malleable state, allowing the reinforcing fibers to return to their nascent or original form as straight fibers, causing loft in the rigid composite material.

## Patentansprüche

1. Verfahren zur Herstellung eines gewebelosen, mittels Druck und/oder Erwärmen formbaren, porösen oder nicht porösen starren Verbundmaterials (10), wobei das Verfahren umfasst:
- Verfestigen eines oder mehrerer Kernvliesmaterialien durch Erwärmen und Komprimieren des einen oder der mehreren Kernvliesmaterialien und Hinzufügen einer oder mehrerer gemusterter, nicht gewebter Stützfaserschichten (14, 16) auf und/oder zwischen Schichten des einen oder der mehreren Kernvliesmaterialien vor dem oder während des Verfestigens, wobei die Kernvliesmaterialien aus etwa 30 bis etwa 70 Gewichtsprozent, bezogen auf das Gesamtgewicht des Vliesmaterials, Verstärkungsfasern und etwa 40 bis etwa 70 Gewichtsprozent, bezogen auf das Gesamtgewicht des Vliesmaterials, eines oder mehrerer thermoplastischer Fasern oder Kunststoffe bestehen und wobei die nicht gewebte gemusterte Stützfaserschicht aus einer Mehrzahl von Fasern in einem Muster besteht, das eine gerade, gestufte, gewinkelte, versetzte oder gitterförmige Anordnung aufweist, die quer zur Querrichtung der Schicht des Kernvliesmaterials verläuft, und wobei die Bedingungen der Kompression und des Erwärmens ausreichen, um die thermoplastischen Fasern oder Kunststoffe zu schmelzen, wodurch ein Netz von Verstärkungsfasern, verteilt in einer thermoplastischen Matrix, gebildet wird.

2. Verfahren nach Anspruch 1, wobei die Mehrzahl der Fasern der nicht gewebten gemusterten Stützfaserschicht (14, 16) Glasfasern, Kohlenstofffasern, teilweise oxidierte Kohlenstofffasern, oxidierte Polyacrylnitrilfasern, Aramidfasern, Hochtemperatur-Polyamidfasern, flüssigkristalline Polymerfasern, Fasern mit ultrahohem Molekulargewicht oder Kombinationen aus diesen umfassen.

3. Verfahren nach Anspruch 1, wobei die nicht gewebte gemusterte Stützfaserschicht (14, 16) eine Schicht unidirektionaler Fasern umfasst, wobei gegebenenfalls der Abstand zwischen den Fasern in Querrichtung auf 12 mm bis 150 mm festgelegt ist.

4. Verfahren nach Anspruch 3, wobei die unidirektionalen Fasern Filamentgarne in Form von unidirektionalem Seil sind und/oder wobei die Filamentgarne Glasfasern, Kohlenstofffasern, Aramidfasern oder Kombinationen aus diesen umfassen.

5. Verfahren nach Anspruch 1, wobei die Verstärkungsfasern der Kernvliesmaterialien anorganische Fasern, metallisierte Glasfasern, Kohlenstofffasern, Aramidfasern, Graphitfasern, synthetische organische Fasern oder Kombinationen aus diesen umfassen.

6. Verfahren nach Anspruch 5, wobei die Verstärkungsfasern der Kernvliesmaterialien Kohlenstofffasern umfassen, wobei gegebenenfalls die Kohlenstofffasern metallisierte Kohlenstofffasern, teilweise oxidierte Kohlenstofffasern oder eine Kombination aus diesen umfassen.

7. Verfahren nach Anspruch 6, wobei die thermoplastischen Fasern oder Kunststoffe der Kernvliesmaterialien Acrylnitril-Butadien-Styrol, Polyamid, Polyamidimid, Polycarbonat, Polyester, Polyetherketon, Polyetherketonketon, Polyetheretherketon, Polyetherimid, Polyolefin, Polyoxymethylen, Polyphenylenether, Polyphenylensulfid, Polysulfon, Polyvinylchlorid, Vinylaromaten, Vinylidenchlorid/Vinylchlorid oder Kombinationen aus diesen umfassen.

8. Verfahren nach Anspruch 1, ferner umfassend:
- Bildung der Schichten aus Kernvliesmaterialien, wobei die eine oder die mehreren nicht gewebten gemusterten Stützfaserschichten (14, 16) auf und/oder zwischen Schichten aus Kernvliesmaterialien zugefügt werden, nachdem die Schichten der Kernvliesmaterialien gebildet wurden.

9. Verfahren nach Anspruch 1, ferner umfassend
- Bildung der Schichten aus Kernvliesmaterialien und
- danach Verfestigen der Kernvliesmaterialien durch Erwärmen und Komprimieren der Kernvliesmaterialien unter Bedingungen, die zum Schmelzen der thermoplastischen Fasern oder Kunststoffe ausreichen, wobei ein Netz von Verstärkungsfasern, verteilt in einer thermoplastischen Matrix, gebildet wird, wobei die eine oder die mehreren nicht gewebten gemusterten Stützfaserschichten (14, 16) auf und/oder zwischen Schichten von Kernvliesmaterialien nach dem Verfestigen der Kernvliesmaterialien zugefügt werden.

10. Gewebeloses, mittels Druck und/oder Erwärmen formbares starres Verbundmaterial (10), welches umfasst:
- eine oder mehrere nicht gewebte gemusterte Stützfaserschichten (14, 16) und
- eine oder mehrere starre Verbundplattenschichten (12), hergestellt aus einem oder mehreren Kernvliesmaterialien, wobei die eine oder die mehreren starren Verbundplattenschichten ein Netz aus Verstärkungsfasern, verteilt in einer thermoplastischen Matrix umfassen, die durch Verfestigen des einen oder der mehreren Kernvliesmaterialien durch Erwärmen und Komprimieren des einen oder der mehreren Kernvliesmaterialien unter Bedingungen, welche zum Schmelzen der thermoplastischen Fasern oder Kunststoffe ausreichen, gebildet wurden, umfassen,
- wobei die eine oder die mehreren Stützfaserschichten sich auf oder in der einen oder der mehreren starren Verbundplattenschichten und/oder an der oberen und/oder unteren Oberfläche (13, 15) des starren Verbundmaterials befinden, und wobei die nicht gewebte gemusterte Stützfaserschicht eine Mehrzahl von Fasern in einem Muster angeordnet umfasst, das eine gerade, gestufte, gewinkelte, versetzte oder gitterförmige Anordnung aufweist, die quer zur Querrichtung der Schicht des Kernvliesmaterials verläuft, und wobei die Bedingungen beim Erwärmen und Komprimieren ausreichen um die thermoplastischen Fasern oder Kunststoffe zu schmelzen, wobei ein Netz von Verstärkungsfasern, verteilt in einer thermoplastischen Matrix, gebildet wird.

11. Starres Verbundmaterial (10) nach Anspruch 10, wobei die Mehrzahl der Fasern der nicht gewebten gemusterten Stützfaserschicht (14, 16) Glasfasern, Kohlenstofffasern, teilweise oxidierte Kohlenstofffasern, oxidierte Polyacrylnitrilfasern, Aramidfasern, Hochtemperatur-Polyamidfasern, flüssigkristalline Polymerfasern, Fasern mit ultrahohem Molekulargewicht oder Kombinationen aus diesen umfassen.

12. Starres Verbundmaterial (10) nach Anspruch 10, wobei die nicht gewebte gemusterte Stützfaserschicht (14, 16) eine Schicht unidirektionaler Fasern umfasst, wobei gegebenenfalls die unidirektionalem Fasern Filamentgarne in Form von unidirektionalem Seil sind, und wobei die Filamentgarne Glasfasern, Kohlenstofffasern, Aramidfasern oder Kombinationen aus diesen umfassen.

13. Verfahren nach Anspruch 1, wobei beim Verfestigen die Verstärkungsfasern durch die geschmolzenen thermoplastischen Fasern oder Kunststoffe getränkt und danach bei minimalem Abrieb oder Bruch der Verstärkungsfasern auf eine bestimmte Dicke komprimiert werden, wobei die geschmolzenen thermoplastischen Fasern oder Kunststoffe eine fließende Art haben, welche die Verstärkungsfasern polstert, wobei danach die thermoplastischen Fasern oder Kunststoffe während des Verfestigens gekühlt und erstarrt werden, wodurch die Verstärkungsfasern freischwebend und gekrümmt gehalten werden, und
- wobei die thermoplastischen Fasern oder Kunststoffe wieder in einen verformbaren Zustand übergehen, wenn danach unter Verwendung des starren Verbundmaterials ein Werkstück gebildet wird, wodurch die Verstärkungsfasern in ihre ursprüngliche Form als gerade Fasern zurückkehren und die starre Verbundplatte aufbauschen können.

14. Starres Verbundmaterial (10) nach Anspruch 10, wobei die Verstärkungsfasern in einem freischwebenden und gekrümmten Zustand vorliegen, wobei der freischwebende und gekrümmte Zustand beim Verfestigen entsteht, wobei beim Verfestigen die Verstärkungsfasern mit den geschmolzenen thermoplastischen Fasern oder Kunststoffen getränkt und auf eine bestimmte Dicke mit minimalem Abrieb oder Bruch der Verstärkungsfasern komprimiert wurden, wobei die geschmolzenen thermoplastischen Fasern oder Kunststoffe eine fließende Art haben, welche die Verstärkungsfasern polstert, wobei danach die thermoplastischen Fasern oder Kunststoffe während des Verfestigens gekühlt und erstarrt werden, wodurch die Verstärkungsfasern freischwebend und gekrümmt gehalten werden, und
- wobei die thermoplastischen Fasern oder Kunststoffe wieder in einen verformbaren Zustand übergehen, wenn danach unter Verwendung des starren Verbundmaterials ein Werkstück gebildet wird, wodurch die Verstärkungsfasern in ihre ursprüngliche Form als gerade Fasern zurückkehren und die starre Verbundplatte aufbauschen können.

## Revendications

1. Procédé d'obtention d'un matériau composite rigide sans canevas pouvant être mis en forme par pression et/ou thermoformable, poreux ou non poreux (10) comprenant des étapes consistant à :
renforcer au moins un matériau d'âme non tissé en chauffant et en comprimant ce matériau d'âme non tissé et ajouter au moins une couche de fibres de support à motifs non tissées (14, 16) sur et/ou entre des couches de matériau d'âme non tissé, avant ou au cours du renfort, le matériau d'âme non tissé étant composé d'environ 30 à environ 70% en poids, basé sur le poids total du matériau non tissé de fibres de renfort, et d'environ 40 à environ 70% en poids par rapport au poids total du matériau non tissé d'au moins une fibre ou résine thermoplastique, et la couche de fibres de support à motifs non tissée comprenant un ensemble de fibres positionnées selon un motif rectiligne étagé, angulaire, en quinconce ou en forme de grille s'étendant au travers de la direction transversale de la couche de matériau d'âme non tissé, et les conditions de chauffage et de compression permettent de fondre les fibres ou résines thermoplastiques en formant ainsi un réseau de fibres de renfort dispersées dans la matrice thermoplastique.

2. Procédé conforme à la revendication 1,
selon lequel l'ensemble de fibres de la couche de fibres de support à motifs non tissées (14, 16) comprend des fibres de verre, des fibres de carbone, des fibres de carbone partiellement oxydées, des fibres de polyacrylonitrile oxydées, des fibres d'aramide, des fibres de polyamide à haute température, des fibres polymères à cristaux liquides, des fibres de poids moléculaire ultra élevé ou leurs combinaisons.

3. Procédé conforme à la revendication 1,
selon lequel la couche de fibres de support à motifs non tissées (14, 16) comprend une couche de fibres unidirectionnelles, et le cas échéant, la distance définie entre les fibres dans la direction transversale est de 12 mm à 150 mm.

4. Procédé conforme à la revendication 3,
selon lequel les fibres unidirectionnelles sont des fils continus sous la forme de filaments unidirectionnels et/ou les fils continus renferment des fibres de verre, des fibres de carbone, des fibres d'aramide ou leurs combinaisons.

5. Procédé conforme à la revendication 1,
selon lequel les fibres de renfort du matériau d'âme non tissées renferment des fibres non organiques, des fibres de verre métallisées, des fibres de carbone, des fibres d'aramide, des fibre de graphite, des fibres organiques synthétiques ou leurs combinaisons.

6. Procédé conforme à la revendication 5,
selon lequel les fibres de renfort du matériau d'âme non tissées renferment des fibres de carbone, et le cas échéant, les fibres de carbone renferment des fibres de carbone métallisées, des fibres de carbone partiellement oxydées ou leurs combinaisons.

7. Procédé conforme à la revendication 6,
selon lequel les fibres ou résines thermoplastiques du matériau d'âme non tissées renferment l'un des polymères suivants : acrylonitrile-butadiène-styrène, polyamide, polyamide-imide, polycarbonate, polyester, polyéther cétone, poly (éther cétone cétone), polyéther éther cétone, polyéther imide, polyoléfine, polyoxyméthylène, polyphénylène éther, polyphénylène sulfure, polysulfone, polyvinyl chlorure, vynyl aromatique, chlorure de vinylidène / chlorure de vinyle ou leurs combinaisons.

8. Procédé conforme à la revendication 1,
comprenant en outre une étape consistant à mettre en forme les couches de matériau d'âme non tissé, la couche de fibres de support à motifs non tissées (14, 16) étant ajoutée sur et/ou entre des couches de matériau d'âme non tissé après la mise en forme des couches de matériau d'âme non tissé.

9. Procédé conforme à la revendication 1, comprenant en outre des étapes consistant à :
mettre en forme les couches de matériau d'âme non tissé, puis renforcer le matériau d'âme non tissé en chauffant et comprimant ce matériau d'âme non tissé dans des conditions permettant de fondre les fibres ou les résines thermoplastiques, en formant ainsi un réseau de fibres de renfort dispersées dans une matrice thermoplastique,
la couche (les) couche(s) de fibres de support à motifs non tissées (14, 16) étant ajoutée(s) sur et/ou entre des couches de matériau de support non tissé après avoir renforcé les couches de matériau d'âme non tissé.

10. Matériau composite rigide sans canevas, pouvant être mis en forme par pression et/ou thermoformable (10) comprenant :
une ou plusieurs couche(s) de fibres de support à motifs (14, 16) et/ou une ou plusieurs couche(s) de feuilles composites rigides (12) préparée(s) à partir d'un ou plusieurs matériau(x) d'âme non tissé(s), cette ou ces couches de feuilles composites rigides renfermant un motif de fibres de renfort dispersées dans une matrice thermoplastique ayant été mise en forme en renforçant le (les) matériau(x) d'âme non tissé(s) par chauffage et compression dans des conditions permettant de fondre les fibres ou les résines thermoplastiques,
la (les) couche(s) de fibres de support étant situées sur ou dans la (les) couche(s) de feuilles composites rigides et/ou sur la surface supérieure et/ou sur la surface inférieure (13, 15) du matériau composite rigide, et la couche de fibres de support à motifs non tissées comprenant un ensemble de fibres positionnées selon un motif qui a une configuration rectiligne, étagée, angulaire, en quinconce, ou en forme de grille s'étendant au travers de la direction transversale de la couche de matériau d'âme non tissé, et les conditions de chauffage et de compression permettant de fondre les fibres ou résines thermoplastiques en formant ainsi un réseau de fibres de renfort dispersées dans une matrice thermoplastique.

11. Matériau composite rigide (10) conforme à la revendication 10, dans lequel l'ensemble de fibres de la couche de fibres de support à motifs non tissées (14, 16) renferme des fibres de verre, des fibres de carbone, des fibres de carbone partiellement oxydées, des fibres de polyacrylonytrile oxydées, des fibres d'aramide, des fibres de polyamide à haute température, des fibres polymères à cristaux liquides, des fibres de poids moléculaire ultra-élevé ou leurs combinaisons.

12. Matériau composite rigide (10) conforme à la revendication 10, dans lequel la couche de fibres de support à motifs non tissées (14, 16) renferme une couche de fibres unidirectionnelles, et le cas échéant, les fibres unidirectionnelles sont des fils continus sous la forme de filaments unidirectionnels et les fils continus renferment des fibres de verre, des fibres de carbone, des fibres d'aramide ou leurs combinaisons.

13. Procédé conforme à la revendication 1,
selon lequel lors du renfort les fibres de renfort sont imprégnées par des fibres ou des résines thermoplastiques fondues, puis comprimées jusqu'à une certaine épaisseur avec une abrasion ou rupture minimum des fibres de renfort, les fibres ou résines thermoplastiques fondues ayant une nature fluide formant coussin sur les fibres de renfort, les fibres ou résines thermoplastiques étant ensuite refroidies et solidifiées lors du renfort en maintenant les fibres de renfort dans un état en porte-à-faux et recourbé, et
lors de la mise en forme ultérieure d'une pièce en utilisant le matériau composite rigide, les fibres ou résines thermoplastiques revenant à un état malléable, permettant ainsi aux fibres de renfort de revenir à leur forme naissante ou originale sous la forme de fibres rectilignes, en créant des galeries dans le matériau composite rigide.

14. Matériau composite rigide (10) conforme à la revendication 10, dans lequel les fibres de renfort sont dans un état en porte-à-faux et recourbé, l'état en porte-à-faux et recourbé étant obtenu lors du renfort, lors du renfort les fibres de renfort ayant été imprégnées par les fibres ou résines thermoplastiques fondues, puis comprimées sur une certaine épaisseur avec une abrasion ou rupture minimum des fibres de renfort, les fibres ou résines thermoplastiques fondues ayant une nature fluide formant coussin sur les fibres de renfort, les fibres ou résines thermoplastiques étant ensuite refroidies et solidifiées lors du renfort, en maintenant les fibres de renfort dans un état en porte-à-faux ou recourbé, et lors de la mise en forme d'une pièce en utilisant le matériau composite rigide, les fibres ou résines thermoplastiques revenant à un état malléable, en permettant aux fibres de renfort de revenir à leur forme naissante ou originale sous la forme de fibres rectilignes, en créant des galeries dans le matériau composite rigide.
